# EUROPEAN PATENT SPECIFICATION

(11) **EP 3 274 836 B1**
(45) Date of publication and mention of the grant of the patent: **16.12.2020**
(21) Application number: 16769207.8
(22) Date of filing: 08.02.2016
(51) Int. Cl.: G06F 11/26, G06F 13/38, G06F 13/40, H01R 31/06, G06F 11/36, G06F 13/362, G06F 13/42

(54) **SYSTEM AND METHOD TO ENABLE CLOSED CHASSIS DEBUG CONTROL INTERFACE USING A USB TYPE-C CONNECTOR**
SYSTEM UND VERFAHREN ZUR AKTIVIERUNG EINER FEHLERBESEITIGUNGSSTEUERSCHNITTSTELLE MIT GESCHLOSSENEM GEHÄUSE ANHAND EINES C-VERBINDERS VOM USB-TYP
SYSTÈME ET PROCÉDÉ POUR ACTIVER UNE INTERFACE DE COMMANDE DE DÉBOGAGE DE CHÂSSIS FERMÉ À L'AIDE D'UN CONNECTEUR DE TYPE C USB

(30) Priority: 25.03.2015 US 201514668706
(43) Date of publication of application: 31.01.2018
(73) Proprietor: Intel Corporation, Santa Clara, CA 95054 (US)
(72) Inventor: SRIVASTAVA, Amit Kumar, Penang 11900 (MY); VADIVELU, Karthi R., Folsom, California 95630 (US)
(74) Representative: Samson & Partner Patentanwälte mbB
(86) International application number: PCT/US2016/016990
(87) International publication number: WO 2016/153609

(56) References cited:
- US-A1- 2009 249 122
- US-A1- 2009 249 122
- US-A1- 2010 299 566
- US-A1- 2013 111 274
- US-A1- 2013 339 789
- US-A1- 2013 339 790
- US-A1- 2015 082 093
- US-A1- 2015 082 093
- Anonymous: "Universal Serial Bus Type-C Cable and Connector Specification", USB 3.0 Promoter Group, Revision 1.0, 11 August 2014 (2014-08-11), pages 13-17, XP055454092, Retrieved from the Internet: URL:http://www.those.ch/designtechnik/wp-c ontent/uploads/2014/08/USB-Type-C-Specific ation-Release-1.0.pdf [retrieved on 2018-02-26]
- HEWLETT-PACKARD COMPANY ET AL.: 'Universal Serial Bus Type-C Cable and Connector Specification Revision 1.0' 11 August 2014, pages 1 - 171, XP055454092 Retrieved from the Internet: <URL:http://www.those.ch/designtechnik/wp-c ontent/uploads/2014/08/USB-Type-C- Specification-Release-1.0.pdf>

## Description

### FIELD OF THE INVENTION

Embodiments of the present invention relate to the field of performing a debug of a system; more particularly, embodiments of the present invention relate to exchanging debug control interface information through a USB Type-C connector.

### BACKGROUND OF THE INVENTION

Traditionally, many devices undergo testing for debug purposes. When these devices are already part of a complete system, it is often necessary to open the chassis of the system to gain access to the device for testing. In this case, a tester or probe is used to apply a test to the device after the system has had their chassis opened. In such a case, the tester or probe interfaces with the device to exchange debug signaling with the device to perform one or more debug operations.

However, this is not possible on many of today's systems in which the chassis cannot be opened. For example, in the case of a tablet, the chassis is typically closed and cannot be opened to allow a component inside the tablet to undergo a debug test. There a number of solutions to enable debug control interface (DCI) or boundary scan side band (BSSB) interface signaling to be done in such closed chassis systems.

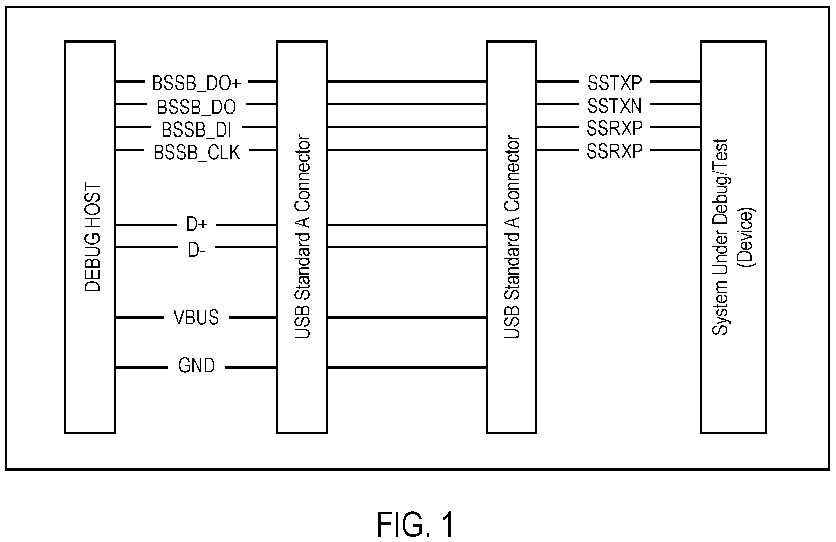

Figure 1 illustrates a BSSB signaling using through the standard-A connector. Referring to Figure 1, a debug host with a Universal Serial Bus (USB) standard-A connector interfaces with a system under debug/test that also has a USB standard A connector. The DCI or BSSB interface signaling is performed using USB3 super speed lanes through the type A-connector of the debug host.

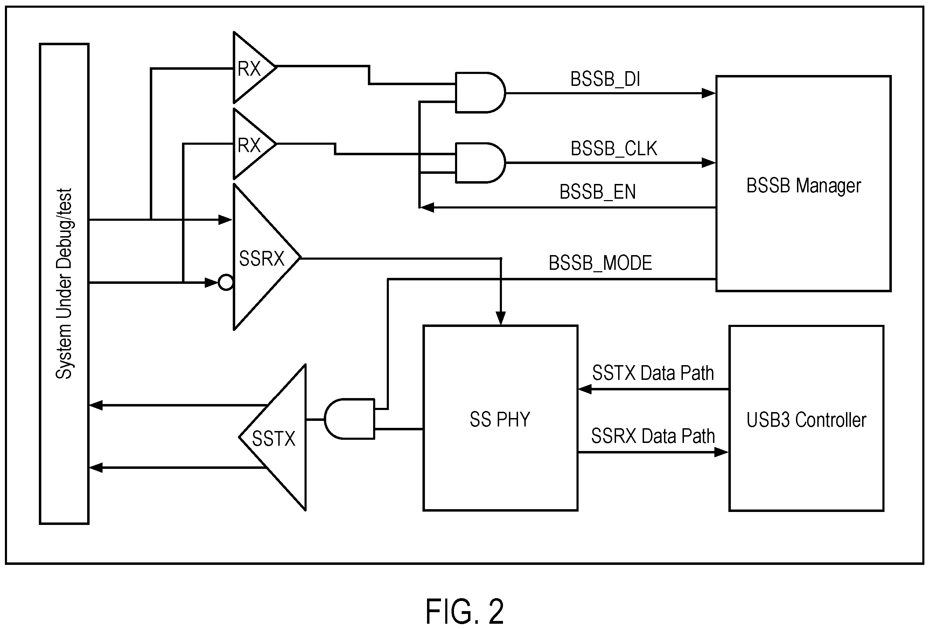

Figure 2 illustrates super speed data path selection that occurs during BSSB signaling. Referring to Figure 2, a BSSB manager is responsible for BSSB scheduling and performs the super speed data path and super speed data path selection.

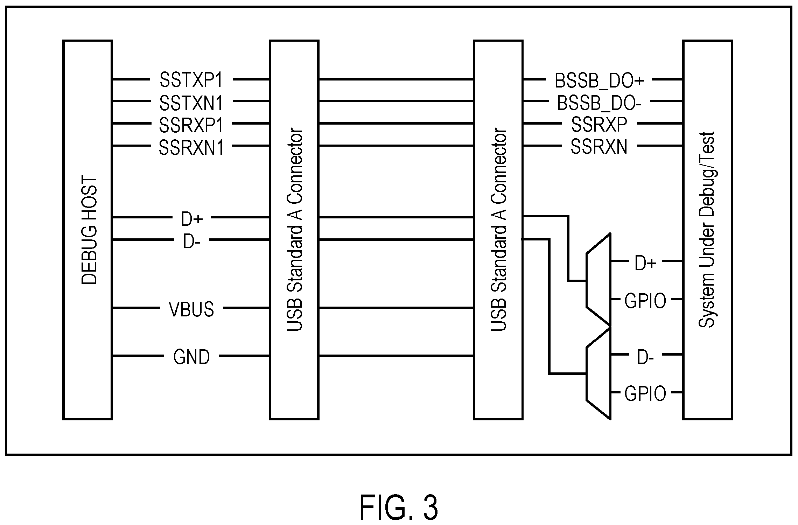

Figure 3 illustrates another implementation of BSSB signaling through a standard-A connector. Referring to Figure 3, the system under debug/test utilizes general purpose input/output (GPIO) connected to a Universal Serial Bus 2.0 (USB2) lane through a multiplexor when using a super speed pin for transmitting BSSB signaling. That is, a Universal Serial Bus 3.0 (USB3) super speed lane is used by the BSSB transmitter on the device under test. The addition of the multiplexor increases the platform bill of materials (BOM) cost.

Recently, universal connector known as Type-C has been developed to provide more flexibility for wired connectivity. Type-C connector supports higher operating frequencies (e.g., 10Gbps). Unfortunately, routing BSSB single ended (at 200MHz or more) signaling over the super speed lane provided by Universal Serial Bus 3.1 (USB3.1) is not a viable solution for use with transmitting DCI signaling for a number of reasons. The main issue is the BSSB receiver signaling is single ended which doesn't work with the USB3.1 re-timer or Type-C multiplexor's based re-timer case. Furthermore, some applications utilize USB3.1 signaling and thus the lanes may already be occupied for another application and cannot be used as a debug control interface. Another reason that routing BSSB single ended signaling over a USB3.1 super speed lane is the addition of a device cap which hampers the USB3.1 maximum operating frequency. Lastly, routing BSSB single ended signaling over a USB3.1 super speed lane would still require the addition of a multiplexor, which would increase the platform BOM cost.

US 2013/339790 A1 pertains to techniques for supporting transmission of debug test data during debug testing of complex ICs such as System on a Chip (SoC) designs. For example, a system and method for a common unified debug architecture for integrated circuits and SoCs, comprises an integrated circuit or SoC which includes a display port, plurality of logic blocks, and debug logic. The debug logic may receive debug data from one or more of the plurality of logic blocks in response to the integrated circuit or SoC operating in a debug mode. In addition, control logic coupled to the debug logic. The control logic provides display data to the display port in response to the integrated circuit operating in an operational mode. The control logic further directs high-speed debug data to the display port in response to the integrated circuit or SoC operating in the debug mode. The high-speed debug data is to be based on the debug data.

US 2013/111274 A1 relates to a SoC. For example, a data processing apparatus having processing circuitry and debug circuitry is debugged by operating the processing circuitry to generate data. The debug circuitry is employed to generate trace elements indicative of the operation of the processing circuitry. Trace elements are caused to be output from the data processing apparatus over a communication bus capable of connecting a plurality of devices. The communication bus is controlled by a protocol for data interchange requiring data interchange from any device on the communication bus to be controlled by a single processing system. The passing of the trace elements onto the communication bus is controlled using an interface unit of the debug circuitry. The interface unit comprises a controller arranged to allow each of the interface unit and processing circuitry to be separate processing systems which can each independently control data interchange from the data processing apparatus.

Anonymous, "Universal Serial Bus Type-C Cable and Connector Specification", USB 3.0 Promoter Group, Revision 1.0,20140811, is the specification which defines the USB Type-C cables, receptacles and plugs.

US 2015/082093 A1 relate to electronic circuits and debug operations performed thereon. For example, an integrated circuit includes hardware sectors associated with observability circuits served by a debug data bus of a debug circuit. A controlled sector residing in a dynamically-controlled power domain may be turned off while the power domain of another sector remains on. To continue to have debug observability all the way through and after these power events, a debug data register is configured to provide data, such as configuration and/or programming data, to the observability circuit of the controlled sector via the debug data bus. A shadow register is configured to capture the data provided to the controlled sector's observability circuit. The shadow register data is used upon restoring power to the controlled sector to restore the controlled sector's observability circuit to a state when the controlled sector was previously powered on.

US 2009/249122 A1 relates to a debugger and a debugging method for debugging a SoC device including a microprocessor-core and additional hardware such as a co-processor or a hardware accelerator, etc. for realizing additional functions. The debugger includes: a break detecting circuit which, when the state of a microprocessor core corresponds to a previously set condition, generates a break request signal for requesting a transition of the microprocessor core to a debug state; a trigger detecting circuit which, when a predetermined signal of additional hardware corresponds to a previously set condition, generates a trigger request signal for requesting observation of the predetermined signal; and, an execution control circuit which, when the trigger request signal has been transmitted, outputs a trigger signal for observing the predetermined signal by means of a logic analyzer and outputs a break signal for causing the microprocessor core to transition to the debug state.

### SUMMARY

The present invention is defined in the independent claims. The dependent claims define embodiments thereof.

### BRIEF DESCRIPTION OF THE DRAWINGS

The present invention will be understood more fully from the detailed description given below and from the accompanying drawings of various embodiments of the invention, which, however, should not be taken to limit the invention to the specific embodiments, but are for explanation and understanding only.
**Figure 1** illustrates a boundary scan side band (BSSB) signaling using through the standard-A connector.
**Figure 2** illustrates super speed data path selection that occurs during BSSB signaling through a standard-A connector.
**Figure 3** illustrates another implementation of BSSB signaling through a standard-A connector.
**Figure 4** is a block diagram of a components used to enable a closed chassis debug control interface (DCI) mode interface through Universal Serial Bus 2.0 (USB2) pins and transceivers.
**Figure 5** illustrates one embodiment of a debug mode interface pin connection using a Type-C connector.
**Figure 6** illustrates one embodiment of a data flow diagram for a process to enable a closed chassis debug mode interface signaling for Type-C and non-Type-C connectors.
**Figure 7** is a flow diagram of one embodiment of a process to enable a closed chassis debug mode interface using a Type-C connector.
**Figure 8** is a flow diagram of one embodiment of a process for enabling a closed chassis debug mode interface for non-type-C-based connector.
**Figure 9** illustrates one embodiment of a USB transceiver implementation to support a debug mode interface.
**Figure 10** illustrates one embodiment of BSSB logic.

### DETAILED DESCRIPTION OF THE PRESENT INVENTION

In the following description, numerous details are set forth to provide a more thorough explanation of the present invention. It will be apparent, however, to one skilled in the art, that the present invention may be practiced without these specific details. In other instances, well-known structures and devices are shown in block diagram form, rather than in detail, in order to avoid obscuring the present invention.

Techniques described herein provide for using Universal Serial Bus 2.0 (USB2) pins for closed chassis debug control interface (DCI) signaling. The closed chassis may be a system such as, for example, a computer system, a tablet, a phone (e.g., a smart phone), a personal digital assistant, and the device that is to undergo debug testing is a component within the closed chassis, such as, for example, a system-on-a-chip (SoC), a processor, an accelerator, etc.

In one embodiment, a system under test comprises a debug control interface (DCI) unit (e.g., a boundary scan side band (BSSB) manager, a connector (e.g., a Type-C connector), a USB2 physical (phy) interface coupled to the connector, and interface logic coupled to the DCI unit and the USB2 phy interface to exchange debug control interface (DCI) signaling (e.g., BSSB signaling) between the connector and the DCI unit. In one embodiment, the DCI unit, the connector, the USB2 phy interface and the interface logic are part of a closed chassis.

In one embodiment, the USB D+/D- lanes of a Type-C connector of the system under test are used for exchanging the DCI (BSSB) signaling. In one embodiment, lanes between a transceiver of the USB2 phy interface and the connector are configured for receiving or transmitting DCI signals based on configuration channel (CC) pin detection and orientation.

In one embodiment, the USB D+/D- lanes are coupled to the USB2 phy interface. In one embodiment, the USB2 phy interface comprises a pair of transceivers, one of the pair of transceivers being selected for receiving or transmitting DCI signals based on CC pin orientation. In one embodiment, the USB2 phy interface comprises a USB2 high speed driver that is used for DCI data out signaling and USB2 receivers for DCI data in (received data) and clock signals.

Therefore, the techniques described herein allow flexible lane configuration and configurability of a USB transceiver based on Type-C plug-in insertion and orientation.

In one embodiment, the USB pins are used for DCI signaling with the closed chassis whether a Type-C or a non-Type-C connector plug is plugged into the connector of the system under test. In such a case, the techniques described herein differentiate between its a Type-C or a non-Type-C connector plug and configure the system under test to enable it to exchange the DCI signaling. Note that connector and plug are used synonymously throughout the specification.

Thus, the techniques described herein enable a closed chassis debug interface for Type-C and non-Type-C connectors using USB2 pins and provide lane configurability for a DCI transceiver (lane inversion) for a Type-C connector based CC orientation detection.

In one embodiment, the DCI signaling occurs during cold boot time of the system under test or when two legacy USB2 ports not connected to the connector. During the cold boot process, the techniques described herein enable an isolation mode flow to boot a USB2 transceiver without the need of controller or a power management controller handshake signals and a reference clock that are normally used when the system under test is fully booted.

In one embodiment, the interface logic that interfaces a DCI unit (e.g., BSSB manager) to the USB lanes/pins also generates a signal(s) to cause one or more non-DCI processing/logic (e.g., blocks not needed for DCI signaling) to remain in a reduced power consumption state while configuring the system for DCI signaling exchange of the between the Type-C connector in the system under test and DCI unit and while exchanging the DCI signaling. In one embodiment, the use of the USB2 pins for closed chassis DCI signaling is done while maintaining internal clocks and power gating of processing/logic blocks which are not relevant to DCI detection flow in a low active power mode, or reduced power consumption mode. Thus, non-DCI (or BSSB) components are maintained in a low power mode to save power, while the USB2 pins are used for DCI signaling.

In one embodiment, internal signals are self-gated to avoid contention due to the controller and power management controller generated signals. This is done to make sure when debug control interface signaling happen at that time no interrupt from controller & power management controller to provide more robust interface signaling

Moreover, the techniques described herein include the use of self-generated clocks to control the boot sequence. In one embodiment, the clocks are generated by the interface logic which includes a clock generator (e.g., a ring oscillator clock) as well as a phased-locked loop (PLL) to generate clocks to control the boot sequence.

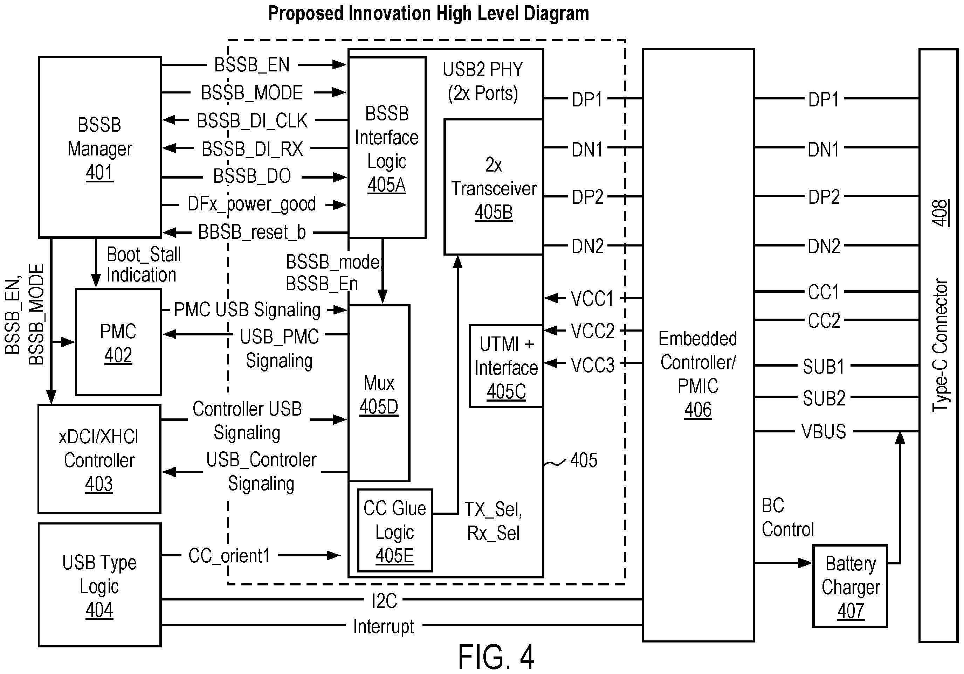

Figure 4 is a block diagram of a components used to enable a closed chassis DCI mode interface through USB2 transceivers and pins. Referring to Figure 4, the components of interface device 405 (e.g., an integrated circuit, or part thereof) in the dotted box enable a closed chassis DCI mode interface for supporting Type-C and non-Type-C base connectors.

In one embodiment, interface device 405 receives signals from BSSB manager 401, power management controller (PMC) 402, debug control interface/host control interface (xDCI/xHCI) 403, USB type logic 404 and embedded controller/power management integrated circuit (PMIC) 406.

Interface device 405 receives a BSSB_EN, BSSB_MODE, BSSB_DO and DFx_power_good signals from BSSB manager 401, while providing BSSB_DI_CLK, BSSB_DI_RX, BSSB_DO and BSSB_reset_b signals to BSSB manager 401. The BSSB signals are well-known in the art.

The DFx_power_good signal is a debug mode indication of whether the power is good for DCI signaling. The BSSB_reset_b signal is a signal to cause BSSB manager 401 to reset. BSSB manager 401 also provides the BSSB_EN and BSSD_MODE signals to xDCI/xHCI 403 to indicate whether the DCI signaling is enabled or disabled. BSSB manager 401 also provides a boot_stall indication to PMC 402 to notify PMC 402 to stall the boot process when the DCI mode signaling is being set up and/or DCI mode signaling is being exchanged between the system under test and the debug host.

PMC 402 sends interface device 405 PMC_USB signaling to interface logic 405 and receives USB_PMC signaling from interface logic 405. In one embodiment, the PMC to/from USB (USB2) signaling is power request and acknowledgment handshaking signaling, which is well-known in the art. xDCI/xHCI 403 sends interface device 405 controller USB signaling to interface logic 405 and receives USB_Controller signaling from interface logic 405. In one embodiment, the USB to/from controller signaling comprises USB2 interface signals as defined in the USB2 protocol.

USB type logic 404 is coupled to embedded controller/PMIC 406 via an I2C bus and an interrupt (e.g., INTA). When a USB plug is inserted into Type-C connector 408, embedded controller 406 signals USB type logic 404, which determines which type of USB plug has been inserted based on its electrical characteristics collected by embedded controller 406. USB type logic 404 determines the orientation of the CC pins and notifies interface logic 405 of the orientation via a CC_orient1 signal.

Interface device 405 interfaces with embedded controller/PMIC 406 via DP1, DN1, DP2, and DN2 signals and a set of voltage pins VCC1, VCC2, and VCC3. The DPI, DN1, DP2 and DN2 are the signals that may be used for the DCI signaling.

Embedded controller/PMIC 406 is also coupled to Type-C connector 408 via DP1, DN1, DP2, DN2, CC1, CC2, SUB1, SUB2, and VBUS signals. Embedded controller /PMIC 406 signals the remainder of the system under test when a plug has been inserted into type-C connector 408 or any other connector of the system. In the case of a USB plug inserted into type- connector 406, embedded controller 406 signals USB type logic 404 as described above.

Battery charger 407 is also coupled to receive a BC control signal from embedded controller/PMIC 406 and provide a voltage onto voltage bus VBUS. In one embodiment, the BC control signal is part of BC control interface define signaling that detects what kind of charging device is connected to the port according to the USB BC charging 1.2 specification.

In one embodiment, interface logic 405 comprises BSSB interface logic 405A, transceivers 405B, multiplexor (mux) 405D, UTMI+ interface 405C, and CC glue logic 405E. BSSB interface logic 405A interfaces the BSSB signals between BSSB manager 401 and transceivers 405B, which exchanges them with the debug host via embedded controller/PMIC 406 and Type-C connector 408.

In one embodiment, transceivers 405B includes a pair of USB2 transceivers, one coupled to each port. Each of the USB2 transceivers is coupled to a different port. One USB2 transceiver is coupled to transmit and receive data through the pins on the top of a USB plug (DP1 and DN1) and the other USB2 transceiver is coupled to transmit and receive data through the pins on the bottom of the USB plug (DP2 and DN2).

When one port is in receive mode, then the other port is in transmit mode or vice versa. In one embodiment, the selection of which of the two transceivers is enabled for DCI signaling is based on CC orientation of the plug that is plugged into the Type-C connector or based on non-Type-C based flow as described below. In one embodiment, the CC orientation is signaled to transceivers 405B via a signal from CC glue logic 405E, which receives information indicative of the orientation from USB type logic 404. USB type logic 404 makes this determination in response to information received from embedded controller/PMIC 406 via an I2C bus when a plug is inserted into Type-C connector 408. In one embodiment, only one of the two transceivers is active and used for DCI signaling at any one time.

In one embodiment, DCI mode transmit data (e.g., the BSSB_DO signal) is mapped to the USB2 high speed transmitter and receive data (the BSSB_DI and BSSB_CLK signals) maps to a single ended receiver, both connected to USB2 pins (e.g., DP1, DP2, DN1, DN2).

UTMI+ interface 405C is the USB 2.0 Transceiver Microcell interface that connects the USB core logic to the USB2 transceivers 405B.

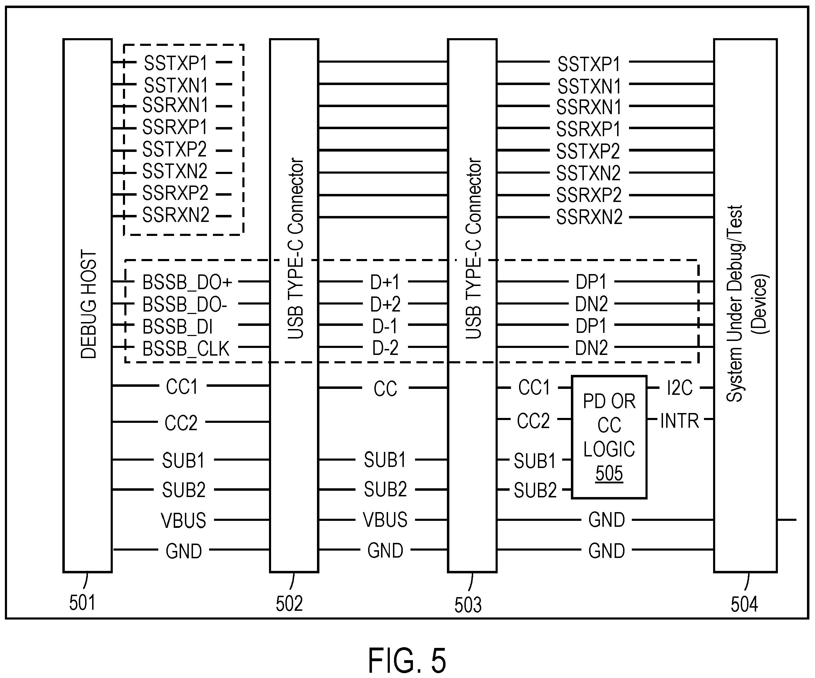

Figure 5 illustrates one embodiment of a debug mode interface (e.g., BSSB signaling) pin connection using a Type-C connector. Referring to Figure 5, a debug host 501 includes a USB Type-C connector 502 and system under test 504 includes USB Type-C connector 503. The interface between debug host 501 and USB Type-C connector 502 includes the following signals: SSTXP1, SSTXN1, SSRXP1, SSRXN1, SSTXP2, SSTXN2, SSRXP2, and SSRXN2, CC1, CC2, SUB1, SUB2, VBUS, GND, as well as BSSB_D0+, BSSB_D0, BSSB_DI, and BSSB_CLK, the use of which are all well known in the art. The interface between system 504 and USB Type-C connector 503 includes the following signals: SSTXP1, SSTXN1, SSRXP1, SSRXN1, SSTXP2, SSTXN2, SSRXP2, and SSRXN2, GND, GND, as well as DP1, DN1, DP2, and DN2, the use of which are all well known in the art. The CC1, CC2, SUB1, and SUB2 signals from USB Type-C connector 503, which are well-known in the art, are coupled to pin detection (PD) or CC logic 505.

Logic 505 detects when a USB connector plug insertion has occurred and provides that information to system 504 via I2C and interrupt INTR signals, the use of which are well-known in the art. That is, logic 505 performs pin detection based on the CC1, CC2, SUB1, and SUB2 signals from USB Type-C connector 503 to determine if there has been a Type-C plug-in insertion into USB Type-C connector 503 and to determine the orientation of the plug. In one embodiment, the detection is through VCC voltage detection (VRD) presence as defined in the USB Type-C specification. The non-Type-C plug detection is performed as defined in the USB protocol.

USB Type-C connectors 503 and 504 are coupled via a number of signals, including SUB1, SUB2, VBUS, GND, D+1, D+2, D-1, D-2, which are well-known in the art. In one embodiment, the D+1, D+2, D-1, D-2 signals may be used, in conjunction with the BSSB_DO+, BSSB_DO, BSSB_DI, and BSSB_CLK signals between debug host 501 and USB Type-C connector 502 and in conjunction with the DP1, DN1, DP2, and DN2 between system 504 and USB Type-C connector 503, to enable and provide the interface for the DCI signals between debug host 501 and the device under test (e.g., an SoC, a processor, etc.) in system 504. Note that while D+1, D+2, D-1, D-2 signals may be used, in one embodiment, only either the top pair D+1 and D+2 or bottom pair D-1 and D-2 are used at any one time for the DCI signaling.

Note also that the interface between and coupling of USB Type-C connectors 503 and 504 have not been shown to avoid obscuring the teachings herein.

Table 1 below illustrates one embodiment of a pin mapping of a DCI (or BSSB) adapter and Type-C connector for when the two USB ports are used to enable closed chassis debug mode interface. These two ports connect to Type-C top and bottom USB2 pins. In one embodiment, this is used in the debug mode interface pin connection of Figure 5.

**Table 1**

| USB Type-C plug | | BSSB Adopter |
|---|---|---|
| Pin | ignal Name | Signal Name |
| A1, B1, A9, B9 | ND | GND GND_DRAIN |
| A4, B4, A9, B9 | BUS | VBUS |
| A5 | C | CC |
| B5 | CONN | --- |
| *A6* | *p1* | *BSSB_D1* |
| *A7* | *n1* | *BSSB_CLK* |
| *B6* | *P2* | *BSSB_DO+* |
| *B7* | *N2* | *BSSB_DO-* |
| *A8* | *BU1* | *SBU1* |
| *B6* | *P2* | *BSSB_DO+* |
| *B7* | *N2* | *BSSB_DO-* |
| A8 | BU1 | SBU1 |
| B8 | BU2 | SBU2 |
| A2, B2 | STXp1, STXp2 | SSTXp1, SSTXp2 |
| A3, B3 | STXn1, STxn2 | SSTXn1, SSTxn2 |
| A11 , B11 | SRXp1, SRXp2 | SSRXp1, SSRXp2 |
| A10 ,B10 | SRXn1, SRXn2 | SSRXn1, SSRXn2 |
| Shel 1 | hield | Shield |

### An Example of a High Level Flow

In one embodiment, the system under test performs a process to configure itself to be responsive to DCI mode signaling. The configuration includes enabling the USB2 transceivers. In one embodiment, once enabled, the receiver portions of the transceivers wait for the debug mode interface (DCI or BSSB) signature. If the signature matches, the DCI mode signaling starts. If a (DCI or BSSB) signature match fails, then the process completes the boot (e.g., SoC boot, processor boot, Intellectual Property Core (IP) boot, etc.) by enabling the remaining functional blocks in the system under test.

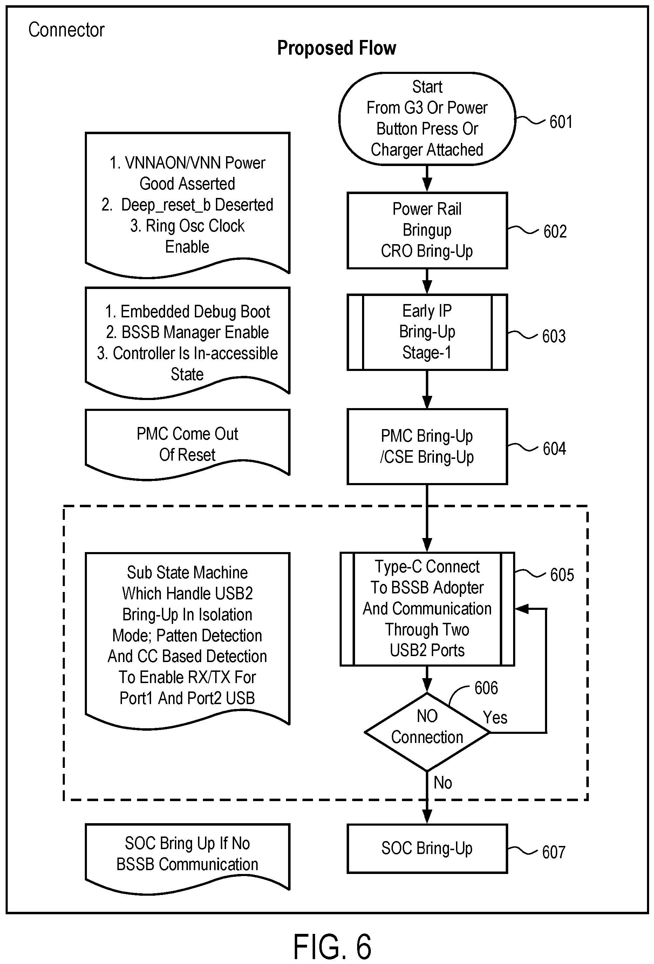

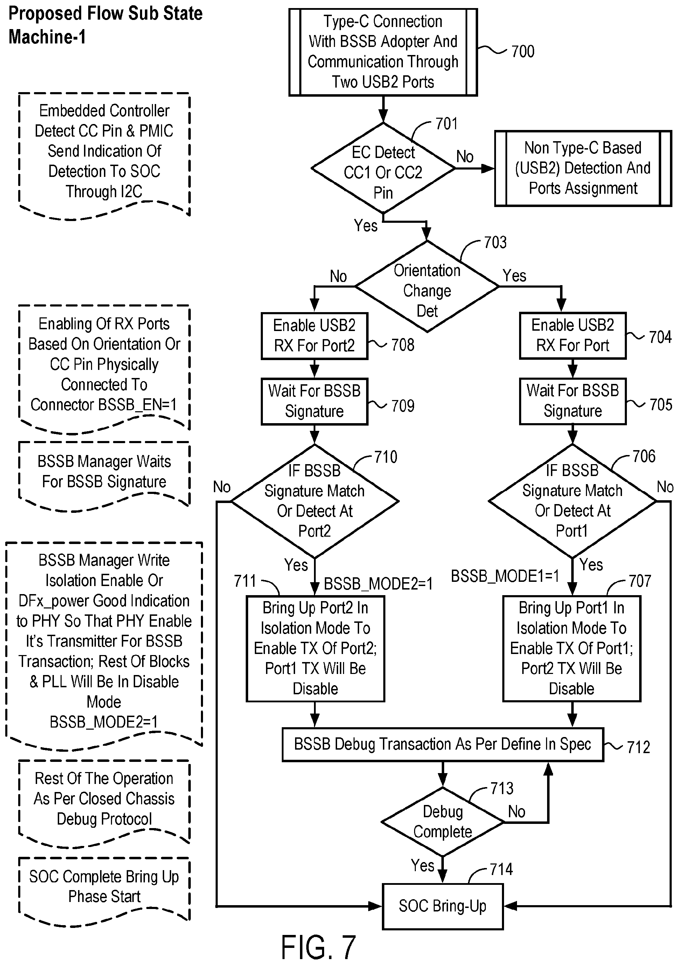

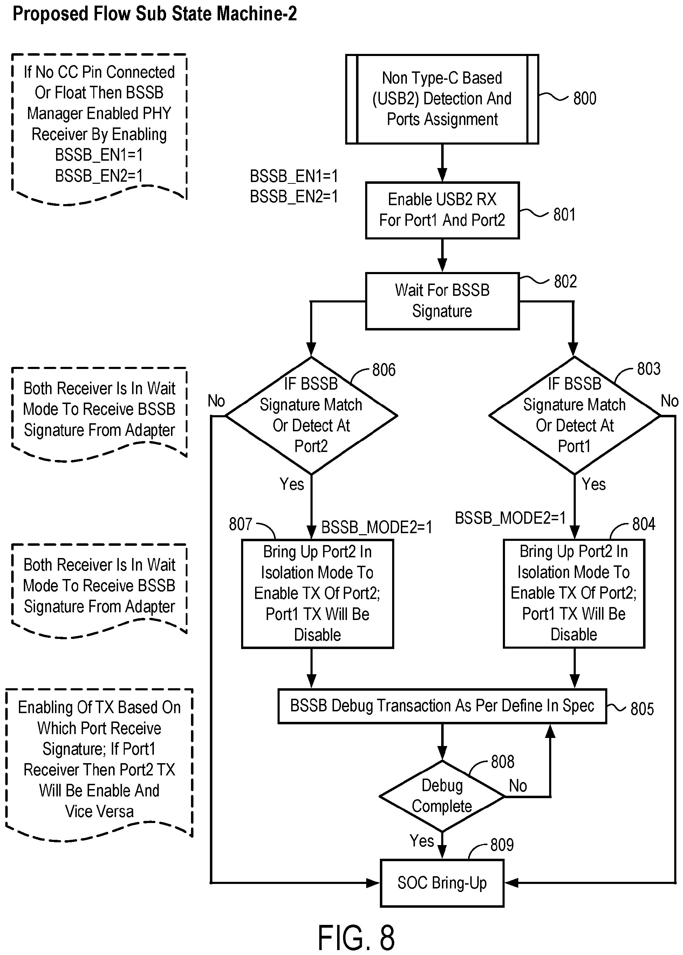

In one embodiment, the following process is used by the system under test for enabling DCI signaling. A more detailed version of the flow is illustrated in Figure 6.
1 First, when a power state (e.g., G3 state) event, a power button event, a charger connect event, or type-C or non-Type-C cable plug insertion event occurs, the embedded controller/PMIC enables the device (e.g., an SOC) always on-domain power supply.
2. Next, the boot flow for the device (e.g., SOC) is started. This may involve an early bring-up stage or boot halt flow condition. In one embodiment, the Boot halt state is where a boot (e.g., an SOC boot) will halt until the time debug interface signaling will not be complete. The PMC is brought up at the same time.
3. After bringing up the PMC, a sub-state machine (shown in Figure 7 and Figure 8) is configured, which controls the flow detection and response for Type-C and non-Type-C based debug mode interface signaling, respectively.
4. The embedded controller/PMIC detects either the CC1 or CC2 pins when a cable is plugged into the Type-C connector, :
   then the embedded controller detects the CC pin orientation after detecting the CC pins are attached and sends indication to USB Type logic through an I2C bus.
   If a change in orientation occurs,
      then DCI mode interface enables the USB2 Port1 receiver (BSSB_EN1==1) and disables the USB2 Port2 receiver (BSSB_EN2==0) which, in one embodiment, is running on an always on supply.
      ii. then, the interface logic waits for a DCI mode signature to be detected through the USB2 port1 receiver.
      iii. if a signature is detected, then the interface logic configures Port2 in isolation mode to enable the USB2 port2 transmitter (BSSB_Mode2==1). Also the USB2 Port1 transmitter is kept disabled (BSSB_Mode1==0)
      If there is no change in orientation:
      then the DCI mode interface enables the USB2 port2 receiver (BSSB_EN2==1) and disables the USB2 Port1 receiver (BSSB_EN1==1), which in one embodiment is running on always on supply.
      ii. then the interface logic waits for a DCI mode signature to be detected through the USB2 port2 receiver.
      iii. if a signature is detected, then the interface logic configures Port1 in isolation mode to enable the USB2 port1 transmitter (BSSB_MODE1==1) while keeping the USB2 Port2 transmitter disabled (BSSB_MODE2==0).
   At this point, DCI or BSSB signaling occurs as defined for the device.
5. If the embedded controller/PMIC detects a non Type-C based connector plug insertion attached with a cable:
   then the interface logic enables USB2 Port1 and Port2 receivers and waits for a signature to be received by the USB2 receiver (BSSB_EN1 and BSSB_EN2==1).
   If a signature is detected at port1 and matches,
   then the interface logic enables the USB2 Port2 transmitter through isolation mode (BSSB_MODE2==1 and BSSB_MODE1==0).
   If a signature is detected at port2 and matches,
   then the interface logic enables the USB2 Port1 transmitter through isolation mode (BSSB_MODE2==0 and BSSB_MODE1==1).

   Thereafter, DCI mode signaling starts as defined in specification for the device under test.
6. After DCI mode signaling has been completed, the flow directs the device under test (e.g., SOC) to complete the cold bootup flow.

Figure 6 illustrates one embodiment of a data flow diagram for a process to enable a closed chassis for debug mode interface signaling (e.g., BSSB) for Type-C and non-Type-C connectors. The process is performed by processing logic that may comprise hardware (circuitry, dedicated logic, etc.), software (such as is run on a general purpose computer system or a dedicated machine), firmware, or a combination of the three.

Referring to Figure 6, the process starts from a particular power state (e.g., the G3 mechanical off power state), after the power button has been pressed, or after a charger is attached (processing block 601). Next, the power rail and ring oscillator (CRO) are brought up (processing block 602). In such a case, a signal indicating the power is good (e.g., the VNNAON/VNN power good) is asserted, a Deep_reset_b signal is deasserted by a DCI unit (e.g., a BSSB manager) to reset BSSB glue logic and make sure the rest of the non-BSSB logic will be in the reset state and a clock generator (e.g., a ring oscillator clock) of the BSSB logic is enabled.

Next, the device (e.g., SOC, processor, IP, etc.) is brought up in Early boot stage where SOC cold boot state will be halt and wait for debug mode interface to be complete (processing block 603). In one embodiment, this entails the booting of the embedded debug and enabling of the BSSB manager. At this point, the embedded controller is still in an inaccessible state.

After bringing up the device, the PMC and the CSE (Security Subsystem) are both brought up and come out of reset (processing block 603).

Thereafter, the type-C connector is electrically connected to the BSSB adapter and communication is able to proceed through the two USB2 ports (processing block 605). In this case, a substate machine handles bringing up the USB2 transceivers in isolation mode. Pattern detection and CC based detection are used to enable the receive (RX)/transmit (TX) for USB ports port1 and port2.

Thereafter, processing logic determines whether there is no longer a connection. If there is no connection, the process transitions to processing block 605 where the process repeats. Once there is a connection, the processing transitions to processing block 607 where the device being debugged (e.g., SOC) is brought up. Thus, if there is no BSSB communication, the device being debugged is brought up into full power mode (non-debug mode).

Figure 7 is a flow diagram of one embodiment of a process to enable a closed chassis debug mode interface using a Type-C connector. The process is performed by processing logic that may comprise hardware (circuitry, dedicated logic, etc.), software (such as is run on a general purpose computer system or a dedicated machine), or a combination of both.

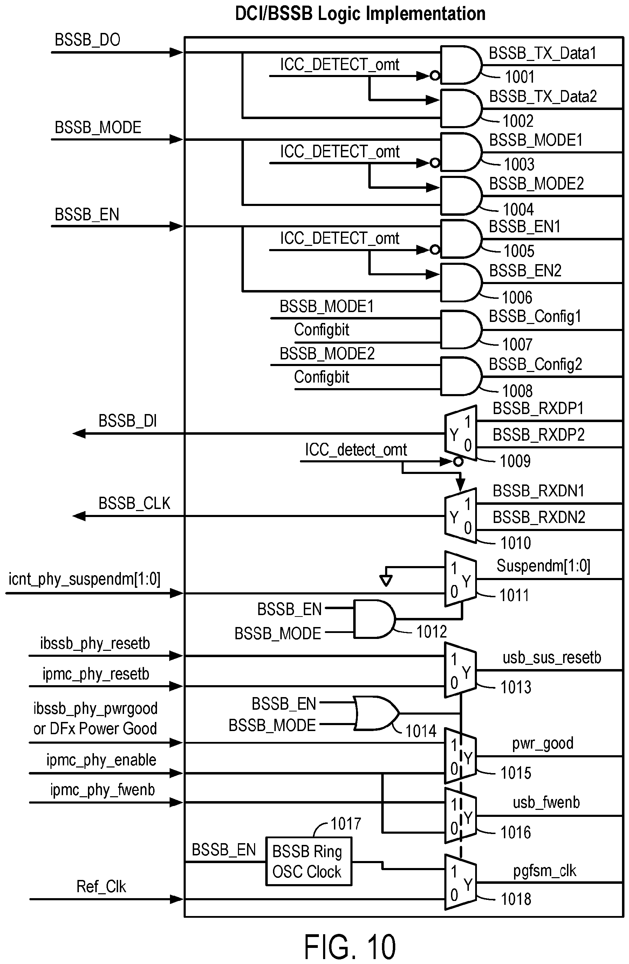

Referring to Figure 7, the process begins with processing logic in the embedded controller (e.g., embedded controller 406) detecting the CC1 pin or the CC2 pin (processing block 701). In this case, the embedded controller detects the CC pin and the PMIC sends an indication of the detection to the SOC type logic through a I2C bus. If the embedded controller does not detect the CC1 or CC2 pin, processing logic determines that it a non-Type-C based connector plug insertion and transitions to using the flow depicted in Figure 10 (and described below).

If the embedded controller detects the CC1 or CC2 pin, the process transitions to processing block 703 where processing logic determines if there has been an orientation change. Based on whether there is an orientation change or not, processing logic enables the receive (RX) ports based on the orientation or CC pin physically connected to the connector. Furthermore, the DCI unit (e.g., BSSB manager) sets the signal BSSB_EN equal to 1. More specifically, if an orientation change has been detected at processing block 703, the process transitions to processing block 704 where processing logic enables the USB2 receiver for USB Port1 and then waits for the BSSB signature (processing block 705). At processing block 706, processing logic determines if the BSSB signature matches or is detected at USB Port1. If not, the process transitions to processing block 714. If so, the process transitions to processing block 707 where USB Port1 is brought up in isolation mode to enable the USB2 Port1 transmitter and disable the USB2 Port2 transmitter.

Referring back to processing block 703, if an orientation change is not detected, processing logic enables the USB2 Port2 receiver (processing block 708) and waits for the BSSB signature (processing block 709). Thereafter, processing logic tests if the BSSB signature matches undetected at USB Port2 (processing block 710). If not, the process transitions to processing block 714. If so, processing logic transitions to processing block 711 where processing logic brings up the USB2 Port2 in the isolation mode to enable the USB2 Port2 transmitter and disable the USB2 Port1 transmitter. In one embodiment, in either processing block 711 or 707, the BSSB manager writes the isolation enable or DFx_power_good indication to the USB2 plug so that the USB2 plug enables its USB2 transmitter for BSSB transactions. In one embodiment, the isolation state is where the PHY turns on independently without the need of a controller or PMC initialization or enabling. In this case, the rest of the blocks and the clock (e.g., a PLL) will be in disabled mode. Also, processing logic sets the BSSB_MODE2 equal to 1.

After enabling the USB2 transmitter for BSSB transactions, processing logic starts BSSB debug transactions (processing block 712). The processing logic then tests whether the debug is complete (processing block 713). If not, the process transitions back to processing block 712 where BSSB debug continues. If debug is complete, processing logic transitions to processing block 714 where the device being debugged (e.g., an SOC, processor, IP, etc.) is brought up in the normal operation mode.

Figure 8 is a flow diagram of one embodiment of a process for enabling a closed chassis debug mode interface for non-type-C-based connector. The process of Figure 8 is used if there is no CC pin connected or a float occurs. The process is performed by processing logic that may comprise hardware (circuitry, dedicated logic, etc.), software (such as is run on a general purpose computer system or a dedicated machine), firmware or a combination of these three.

Referring to Figure 8, the process begins by processing logic enabling the USB2 receiver for both USB Port1 and Port2 (processing block 801). In one embodiment, the BSSB manager enables the USB2 phy receivers by setting BSSB_EN1 and BSSB_EN2 equal to 1. Thereafter, processing logic waits for the BSSB signature (processing block 802). Processing logic tests whether the BSSB signature matches or is detected at USB Port1. If it is not, processing logic transitions to processing block 809. If it is, then processing logic transitions to processing block 804 and disables where processing logic brings up USB Port1 in isolation mode to enable the USB2 Port1 transmitter and disables USB2 Port2 transmitter.

Processing logic also tests whether the BSSB signature matches or is detected at USB Port2. If not, the processing logic transitions to processing block 809. If it is, processing logic brings up USB Port2 in isolation mode to enable the USB2 Port2 transmitter and disables the USB2 Port1 transmitter. Thus, both receivers are in a wait mode to receive a BSSB signature from the adapter and then enable one transmitter based on which USB port receives the signature.

After bringing up the transmitters of one or the other ports, processing logic performs the BSSB debug according to a debug specification for the device being debugged (processing block 805). Processing logic tests whether the debug is complete (processing block 808). If it is not, the process returns to processing block 805 where the debug operation continues. If debug is complete, processing logic transitions to processing block 809 where the device being debugged (e.g., SOC, processor, IP, etc.) is brought up.

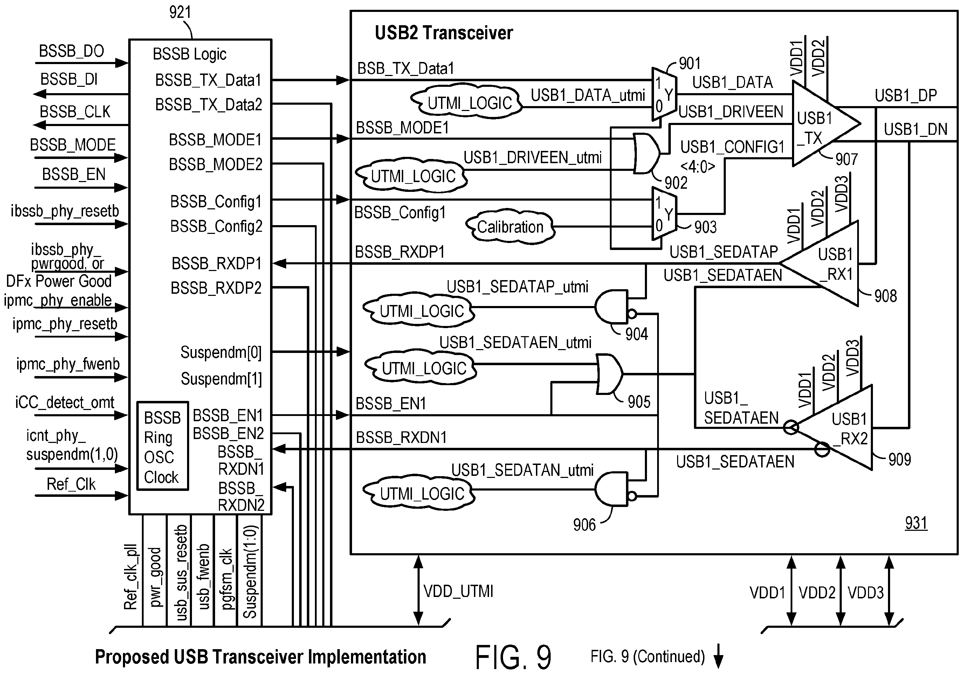

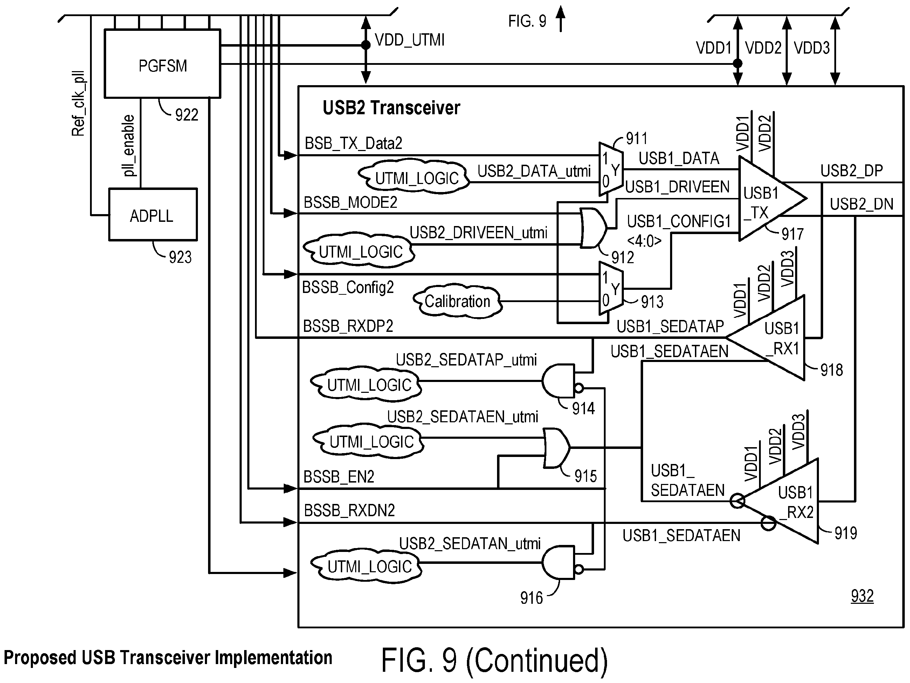

Figure 9 illustrates one embodiment of USB transceiver implementation to support a debug mode interface. This transceiver implementation may be part of the interface logic of Figure 4.

Referring to Figure 9, BSSB logic 921 provides signals to and receives signals from USB2 transceivers 931 and 932.

The implementation also includes a power good finite state machine (PGFSM) 922 that provides voltages to USB2 transceivers 931 and 932 as well as an enable signal for the clock 923 (since clocks are gated, the enable signals are used to disable clock gating). In one embodiment, clock 923 (e.g., a PLL) provides a clocks to BSSB logic 921.

Transceiver 931 includes a transmitter 907 and a pair of receivers 908 and 909. Transceiver 931 is capable of transmitting data on either the USB 1_DP or USB 1_DN. Receiver 908 receives signal from USB 1_DP, while receiver 909 receives signal from USB 1_DN. Furthermore, transmitter 907 transmits either a USB 1_DATA signal or a USB_1-Config_1 signal received on its input. In one embodiment, transmitter 907 is enabled using a USB 1_DRIVEEN signal. A USB1_DATA signal is an output of multiplexor (MUX) 901 which receives a BSSB_TX_Data1 from BSSB logic 924 on its 1 input and receives a USB_DATA_utmi signal from UTMI Logic on its 0 input. Based on a selection signal, either of those two inputs will be received on the USB 1_DATA input of transmitter 907. The USB_CONFIG1 signals output of multiplexor (mux) 903. Mux 903 received a BSSB_Config1 on its 1 input from BSSB logic 921 and a calibration signal on its 0 input, where the calibration signal is generated from on-chip calibration circuits.

The USB 1_DRIVEEN signal enable transmitter 907 and is sent from the output of OR gate 902. The inputs to OR gate 902 include the BSSB_MODE1 signal from BSSB logic 921 and a USB 1_DRIVEEN_utmi signal from the UTMI Logic.

USB2 transceiver 931 also includes USB2 receivers 908 and 909. USB2 receiver 908 is coupled to the USB1_DP pin and sends the received data to the BSSB_RXDP1 input of BSSB logic 921. The output of OR gate 905 enables receiver 908, which receives a data enable signal from the UTMI Logic (e.g., UTMI logic 405C) and the BSSB_EN1 signal from BSSB logic 921 on its inputs. The received data from USB2 receiver 908 is also input to AND gate 904. The other input to AND gate 904 is an inverted version of the BSSB_EN1 signal from BSSB logic 921. The output of AND gate 904 is sent to the UTMI Logic (e.g., UTMI logic 405C).

Similarly, USB2 receiver 909 is coupled to the USB1_DN pin and sends the received data to the BSSB_RXDN1 input of BSSB logic 921. The output of OR gate 905 enables receiver 909, which receives a data enable signal from the UTMI Logic (e.g., UTMI logic 405C) and the BSSB_EN1 signal from BSSB logic 921 on its inputs. The received data from USB2 receiver 909 is also input to AND gate 906. The other input to AND gate 906 is an inverted version of the BSSB_EN1 signal from BSSB logic 921. The output of AND gate 906 is sent to the UTMI Logic (e.g., UTMI logic 405C).

Transceiver 932 includes a transmitter 917 and a pair of receivers 918 and 919. Transceiver 932 is capable of transmitting data on either the USB2_DP or USB1_DN. Receiver 918 receives signal from USB2_DP, while receiver 919 receives signal from USB2_DN. Furthermore, transmitter 917 transmits either a USB2_DATA signal or a USB2_Config1 signal received on its input. In one embodiment, transmitter 917 is enabled using a USB2_DRIVEEN signal. A USB2_DATA signal is an output of multiplexor (mux) 911 which receives a BSSB_TX_Data2 from BSSB logic 924 on its 1 input and receives a USB_DATA_utmi signal from UTMI Logic on its 0 input. Based on a selection signal, either of those two inputs will be received on the USB2_DATA input of transmitter 917. The USB_CONFIG1 signals output of multiplexor (mux) 913. Mux 913 received a BSSB_Config1 on its 1 input from BSSB logic 921 and a calibration signal on its 0 input (coming from calibration block not shown in this figure)

The USB2_DRIVEEN signal enable transmitter 917 and is sent from the output of OR gate 912. The inputs to OR gate 912 include the BSSB_MODE2 signal from BSSB logic 921 and a USB2_DRIVEEN_utmi signal from the UTMI Logic.

USB2 transceiver 932 also includes USB2 receivers 918 and 919. USB2 receiver 918 is coupled to the USB2_DP pin and sends the received data to the BSSB_RXDP2 input of BSSB logic 921. The output of OR gate 915 enables receiver 918, which receives a data enable signal from the UTMI Logic (e.g., UTMI logic 405C) and the BSSB_EN2 signal from BSSB logic 921 on its inputs. The received data from USB2 receiver 918 is also input to AND gate 914. The other input to AND gate 914 is an inverted version of the BSSB_EN2 signal from BSSB logic 921. The output of AND gate 914 is sent to the UTMI Logic (e.g., UTMI logic 405C).

Similarly, USB2 receiver 919 is coupled to the USB2_DN pin and sends the received data to the BSSB_RXDN2 input of BSSB logic 921. The output of OR gate 915 enables receiver 919, which receives a data enable signal from the UTMI Logic (e.g., UTMI logic 405C) and the BSSB_EN2 signal from BSSB logic 921 on its inputs. The received data from USB2 receiver 919 is also input to AND gate 916. The other input to AND gate 916 is an inverted version of the BSSB_EN2 signal from BSSB logic 921. The output of AND gate 916 is sent to the UTMI Logic (e.g., UTMI logic 405C).

BSSB 921 also provides a suspend signal (suspend[0]) to transceiver 931. The suspend signals, suspend[1:0] are generated by some logic in BSSB logic 921.

BSSB logic 921 exchanges a number of signals with BSSB manager. Specifically, the BSSB manager provides BSSB_DO, BSSB_MODE, BSSB_EN signals as well as a DFX_power_good signal. Other signals received by BSSB logic include ibssb_phy_resetb to indicate BSSB logic 921 is to reset the USSB2 phy, ibbsb_pwrgood or DFx_Power_Good to indicate whether the power state of the system, ipmc_phy_enable to indicate the BSSB logic 921 to enable the USB2 phy, ipmc_phy_resetb to indicate to BSSB logic 921 to reset the USB2 phy, impc_phy_fwenb which are firewall signals to make sure signals are in a defined state during power ramp-up), iCC_detect_omt to indicate to BSSB logic 921 that CC pin detection has occurred, icnt_phy_suspend(1:0) to indicate to BSSB logic 921 is to suspend either the 2 USB2 transceivers and a reference clock Ref_Clk.

BSSB logic 921 also includes a BSSB ring oscillator (OSC) clock. In one embodiment, the ring OSC clock is used during BSSB signaling, and the Ref clock is used by the clock generator (e.g., PLL), which are enabled during normal USB2 operations.

Figure 10 illustrates one embodiment of BSSB logic, such as BSSB logic 921 of Figure 9. This BSSB logic controls the inputs and outputs received to prevent the bootup operation of the rest of the system from occurring when using the USB2 phy for DCI signaling. The BSSB logic also ensures that the controllers are controlled to ensure that nothing fully comes up or causes the controller to boot up the rest of the system.

Referring to Figure 10, the BSSB_D0 signal is received by an input of AND gates 1001 and 1002. The other input to AND gates 1001 and 1002 are the iCC_detect_omt signal, which indicate that a CC pin insertion has been detected. In the case of AND gate 1001, the ICC_detect_omt signal is received on an inverted input. The output of AND gate 1001 is the BSSB_TX_Data1 signal. The output of AND gate 1002 is the BSSB_TX_Data2 signal.

The BSSB_MODE signal is received by an input of AND gates 1003 and 1004. The other input to AND gates 1003 and 1004 are the iCCd_detect_omt signal. In the case of AND gate 1003, the ICC_detect_omt signal is received on an inverted input. The output of AND gate 1003 is the BSSB_MODE1 signal. The output of AND gate 1004 is the BSSB_MODE2 signal.

The BSSB_EN signal from a DCI unit (e.g., BSSB manager) is received by an input of AND gates 1005 and 1006. The other input to AND gates 1005 and 1006 is the iCCD_detect_omt signal. In the case of AND gate 1005, the ICCM_detect_omt signal is received on an inverted input, and the output of AND gate 1005 is the BSSB_EN1 signal. The output of AND gate 1006 is the BSSB_EN2 signal.

BSSB logic also provides a BSSB_DI signal to the BSSB manager. This signal is output from multiplexor (mux) 1009. The inputs to mux 1009 include BSSB_RXDP1 on its 1 input and BSSB_RXDP2 on its 0 input, which are received from the two USB2 transceivers, such as transceiver 1131 and 1132 of Figure 9. The selection input of mux 1009 is an inverted version of the ICC_detect_omt signal.

The BSSB logic also provides a BSSB_CLK signal to the BSSB manager. The BSSB_CLK signal is output from mux 1010 which receives the BSSB_RXDN1 from USB2 transceiver (e.g., transceiver 931) signal on its 1 input and the BSSB_RXDN2, signal on its 0 input from the other transceiver (e.g., transceiver 932). The selection input of mux 1010 is the ICC_detect_omt signal.

The BSSB logic also provides a suspendm[1:0] signal to USB2 transceivers 1 and 2. These signals are output from mux 1011. Note that while only one multiplexer is shown, in one embodiment, there are two multiplexers that each generate one of the suspendm signals. Input 1 of mux 1011 is grounded, while input 0 is the signal ICNT_phy_suspendm[1:0] from the xHCI Controller. The selection input of mux 1011 is the output of AND gate 1012, which receives the BSSB_EN and BSSB_MODE signals on its input from the DCI unit (e.g., BSSB manager).

The BSSB logic also generates the usb_sus_resetb signal which is output from mux 1013. The inputs of mux 1013 are the ibssb_phy_resetb signal and the impc_phy_resetb signal. The selection of mux 1013 is the output of OR gate 1014, which has the BSSB_EN and BSSB_MODE signals as its input.

The BSSB logic also provides a pwer_good signal to the transceiver from mux 1015. The inputs of mux 1015 includes ibssb_phy_pwrgood/DFx_Power_Good and ipmc_phy_enable that is provided by the PMC to indicate that the selection input of mux 1016 is the output of OR gate 1014. Similarly, the USSB logic provides an output of usb_fwenb signal from mux 1016, which makes sure that a signal(s) are in a defined state during power supply ramp up or when no power is available. The inputs of mux 1016 are the ipmc_phy_enable which indicates that the PMC wants to enable the transceiver and ipmc_phy_fwenb signals. The selection input of mux 1016 is the output of OR gate 1014.

The BSSB logic also provides a pgfsm_clk signal to the power good finite state machine (PGFSM) from mux 1018. The inputs to mux 1018 are the Ref_Clk signal from BSSB manager on its 0 input and the output of BSSB ring oscillator clock 1017 on its 1 input. BSSB ring clock oscillator 1017 is enabled by the BSSB_EN signal from a DCI unit (e.g., BSSB manager). The selection input of mux 1018 is the output of OR gate 1014. Thus, the clock provided to the PGFSM is either the reference clock Ref_Clk or the clock from BSSB ring clock oscillator 1017.

In a first example embodiment, a system comprises: a debug control interface (DCI) unit; a Type-C connector; logic to generate configuration signals; a Universal Serial Bus physical (phy) interface coupled to the Type-C connector and the logic, the USB phy interface including first and second transceivers configured based on the configuration signals from the logic to be either a receiver or transmitter of DCI signals; and an interface coupled to the DCI unit and the USB phy interface to transmit and receive DCI signaling between the USB phy interface and the DCI unit.

In another example embodiment, the subject matter of the first example embodiment can optionally include that the DCI unit, the Type-C connector, the logic, the USB phy interface and the interface are part of a closed chassis.

In another example embodiment, the subject matter of the first example embodiment can optionally include that the pair of transceivers are configured for receiving or transmitting the DCI signals based on configuration channel (CC) pin orientation.

In another example embodiment, the subject matter of the first example embodiment can optionally include that lanes between the first and second transceivers of the USB2 phy interface and the connector are configured for receiving or transmitting the DCI signals based on CC pin detection and orientation.

In a second example embodiment, a system comprises a debug control interface (DCI) unit; a connector; a Universal Serial Bus 2.0 (USB2) physical (phy) interface coupled to the connector; and interface logic coupled to the DCI unit and the USB2 phy interface to exchange debug control interface (DCI) signaling between the connector and the DCI unit.

In another example embodiment, the subject matter of the second example embodiment can optionally include that the DCI unit, the connector, the USB2 phy interface and the interface logic are part of a closed chassis.

In another example embodiment, the subject matter of the second example embodiment can optionally include that the connector is a Type-C connector.

In another example embodiment, the subject matter of the second example embodiment can optionally include that the USB2 phy interface comprises a pair of transceivers, one of the pair of transceivers being selected for receiving or transmitting DCI signals based on configuration channel (CC) pin orientation.

In another example embodiment, the subject matter of the second example embodiment can optionally include that lanes between a transceiver of the USB2 phy interface and the connector are configured for receiving or transmitting DCI signals based on CC pin detection and orientation.

In another example embodiment, the subject matter of the second example embodiment can optionally include that the USB2 phy interface comprises a USB2 driver used for DCI data out signaling and USB2 receivers for DCI receive data and clock signals.

In another example embodiment, the subject matter of the second example embodiment can optionally include that the interface logic is operable to generate at least one signal to cause a non-DCI component to remain in a reduced power consumption state while the DCI signaling is being exchanged between the connector and DCI unit.

In another example embodiment, the subject matter of the second example embodiment can optionally include that the DCI signaling is to occur during cold boot time or when USB2 devices not connected to ports or are in the suspend state.

In a third example embodiment, an apparatus comprises: a USB2 physical (phy) interface for coupling to a connector; and interface logic coupled to the USB2 phy interface to exchange debug control interface (DCI) signaling between the connector and a DCI unit.

In another example embodiment, the subject matter of the third example embodiment can optionally include that the DCI unit, the connector, the USB2 phy interface and the interface logic are part of a closed chassis.

In another example embodiment, the subject matter of the third example embodiment can optionally include that the connector is a Type-C connector.

In another example embodiment, the subject matter of the third example embodiment can optionally include that the USB2 phy interface comprises a pair of transceivers, one of the pair of transceivers being selected for receiving or transmitting DCI signals based on CC pin orientation.

In another example embodiment, the subject matter of the third example embodiment can optionally include that lanes between a transceiver of the USB2 phy interface and the connector are configured for receiving or transmitting DCI signals based on CC pin detection and orientation.

In another example embodiment, the subject matter of the third example embodiment can optionally include that the USB2 phy interface comprises a USB2 driver used for DCI data out signaling and USB2 receivers for DCI receive data and clock signals.

In another example embodiment, the subject matter of the third example embodiment can optionally include that the interface logic is operable to generate at least one signal to cause a non-DCI component to remain in a reduced power consumption state while the DCI signaling is being exchanged between the connector and DCI unit.

In a fourth example embodiment, a method for use in a system having a closed chassis and a connector comprises: detecting CC pins when a cable is plugged into a connector; detecting CC pin orientation in response to detecting the CC pins being plugged into the connector; and exchanging debug control interface (DCI) signaling between the connector and a DCI unit in the system using a USB2 physical (phy) interface.

In another example embodiment, the subject matter of the fourth example embodiment can optionally include selecting one transceiver in the USB2 phy interface for receiving or transmitting DCI signals based on based on CC pin orientation.

In another example embodiment, the subject matter of the fourth example embodiment can optionally include configuring lanes between a transceiver of the USB2 phy interface and the connector for receiving or transmitting DCI signals based on CC pin detection and orientation.

In another example embodiment, the subject matter of the fourth example embodiment can optionally include generating at least one signal to cause a non-DCI component to remain in a reduced power consumption state while the DCI signaling is being exchanged between the connector and a DCI unit.

In a fifth example embodiment, a machine-readable medium comprises instructions that when operated on by a machine cause the machine to perform a method that comprises configuring a USB2 physical interface in response to detecting CC pins when a cable is plugged into a connector and detecting CC pin orientation; and exchanging debug control interface (DCI) signaling between the connector and a DCI unit using a USB2 physical (phy) interface.

In another example embodiment, the subject matter of the fifth example embodiment can optionally include the method further comprises generating signals to configure lanes between a transceiver of the USB2 phy interface and the connector for receiving or transmitting DCI signals based on CC pin detection and orientation.

Some portions of the detailed descriptions presented above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The present invention also relates to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description below. In addition, the present invention is not described with reference to any particular programming language. It will be appreciated that a variety of programming languages may be used to implement the teachings of the invention as described herein.

A machine-readable medium includes any mechanism for storing or transmitting information in a form readable by a machine (e.g., a computer). For example, a machine-readable medium includes read only memory ("ROM"); random access memory ("RAM"); magnetic disk storage media; optical storage media; flash memory devices; etc.

Whereas many alterations and modifications of the present invention will no doubt become apparent to a person of ordinary skill in the art after having read the foregoing description, it is to be understood that any particular embodiment shown and described by way of illustration is in no way intended to be considered limiting. Therefore, references to details of various embodiments are not intended to limit the scope of the claims which in themselves recite only those features regarded as essential to the invention.

## Claims

1. A system comprising:
a debug control interface, DCI, unit;
a Type-C connector;
a Universal Serial Bus, USB, physical, phy, interface coupled to the Type-C connector, the USB phy interface having at least one transceiver, lanes between the at least one transceiver of the USB phy interface and the Type-C connector being configured for receiving or transmitting DCI signals based on configuration channel, CC, pin detection and orientation; and
interface logic coupled to the DCI unit and the USB phy interface to exchange debug control interface, DCI, signaling between the connector and the DCI unit,
wherein USB D+ and/or USB D- lanes of the Type-C connector are used for exchanging the DCI signaling and the DCI signaling including boundary scan side band, BSSB, control and data signals.

2. The system defined in Claim 1 wherein the DCI unit, the connector, the USB phy interface and the interface logic are part of a closed chassis.

3. The system defined in Claim 1 wherein the USB phy interface comprises a pair of transceivers, one of the pair of transceivers being selected for receiving or transmitting DCI signals based on the CC pin orientation.

4. The system defined in Claim 1 wherein the USB phy interface comprises a Universal Serial Bus 2.0, USB2, phy interface.

5. The system defined in Claim 4 wherein the USB2 phy interface comprises a USB2 driver used for DCI data out signaling and USB2 receivers for DCI receive data and clock signals.

6. The system defined in Claim 1 wherein the interface logic is operable to generate at least one signal to cause a non-DCI component to remain in a reduced power consumption state while the DCI signaling is being exchanged between the connector and DCI unit.

7. The system defined in Claim 1 wherein the DCI signaling is to occur during cold boot time or when USB devices not connected to ports or are in the suspend state.

8. A method for use in a system having a closed chassis and a Type-C connector, the method comprising:
detecting configuration channel, CC, pins when a cable is plugged into the Type-C connector;
detecting CC pin orientation in response to detecting the CC pins being plugged into the Type-C connector; and
exchanging debug control interface, DCI, signaling between the Type-C connector and a debug control interface, DCI, unit in the system using a Universal Serial Bus, USB, physical, phy, interface, the USB phy interface having at least one transceiver, lanes between the at least one transceiver of the USB phy interface and the Type-C connector receiving or transmitting the DCI signaling based on the CC pin detection and orientation,
wherein USB D+ and/or USB D- lanes of the Type-C connector are used for exchanging the DCI signaling and the DCI signaling including boundary scan side band, BSSB, control and data signals.

9. The method defined in Claim 8 further comprising selecting one transceiver in the USB phy interface for receiving or transmitting DCI signals based on CC pin orientation.

10. The method defined in Claim 8 further comprising generating at least one signal to cause a non-DCI component to remain in a reduced power consumption state while the DCI signaling is being exchanged between the connector and a DCI unit.

11. A machine-readable medium having instructions that when executed by a machine cause the machine to perform a method of any one of claims 8 to 10.

## Patentansprüche

1. System, umfassend:
eine Fehlerbeseitigungssteuerschnittstellen-,DCI,-Einheit;
einen Typ-C-Verbinder;
eine physikalische, phy, Schnittstelle des Universellen Seriellen Busses, USB, die mit dem Typ-C-Verbinder gekoppelt ist, wobei die phy-USB-Schnittstelle mindestens einen Sendeempfänger aufweist, und Lanes zwischen dem mindestens einen Sendeempfänger der phy-USB-Schnittstelle und dem Typ-C-Verbinder zum Empfangen oder Senden von DCI-Signalen basierend auf Konfigurationskanal-,CC-,Stifterkennung und -Ausrichtung konfiguriert sind; und
Schnittstellenlogik, die mit der DCI-Einheit und der phy-USB-Schnittstelle gekoppelt ist, zum Austauschen von Signalisierung der Fehlerbeseitigungssteuerschnittstelle, DCI, zwischen dem Verbinder und der DCI-Einheit,
wobei USB D+ und/oder USB D- Lanes des Typ-C-Verbinders zum Austauschen der DCI-Signalisierung verwendet werden, und die DCI-Signalisierung Grenzabtastungsseitenband-,BSSB-,Steuer- und - Datensignale umfasst.

2. System nach Anspruch 1, wobei die DCI-Einheit, der Verbinder, die phy-USB-Schnittstelle und die Schnittstellenlogik Teil eines geschlossenen Chassis sind.

3. System nach Anspruch 1, wobei die phy-USB-Schnittstelle ein Paar von Sendeempfängern umfasst, wobei einer des Paares von Sendeempfängern zum Empfangen oder Senden von DCI-Signalen basierend auf der CC-Stiftausrichtung ausgewählt ist.

4. System nach Anspruch 1, wobei die phy-USB-Schnittstelle eine phy-Schnittstelle des Universellen Seriellen Busses 2.0, USB2, umfasst.

5. System nach Anspruch 4, wobei die phy-USB2-Schnittstelle einen USB2-Treiber, der für DCI-Datenausgabesignalisierung verwendet wird, und USB2-Empfänger zum Empfangen von DCI-Daten- und -Taktsignalen umfasst.

6. System nach Anspruch 1, wobei die Schnittstellenlogik so ausgelegt ist, dass sie mindestens ein Signal erzeugt, um eine Nicht-DCI-Komponente zu veranlassen, in einem Zustand reduzierten Leistungsverbrauchs zu bleiben, während die DCI-Signalisierung zwischen dem Verbinder und der DCI-Einheit ausgetauscht wird.

7. System nach Anspruch 1, wobei die DCI-Signalisierung während einer Kaltstartzeit oder, wenn USB-Vorrichtungen nicht an Ports angeschlossen sind oder in einem Unterbrechungszustand sind, stattfinden soll.

8. Verfahren zur Verwendung in einem System mit geschlossenem Chassis und einem Typ-C-Verbinder, wobei das Verfahren umfasst:
Erkennen von Konfigurationskanal-,CC-,Stiften, wenn ein Kabel in den Typ-C-Verbinder gesteckt wird;
Erkennen einer CC-Stiftausrichtung in Reaktion auf das Erkennen der in den Typ-C-Verbinder gesteckten CC-Stifte; und
Austauschen von Signalisierung einer Fehlerbeseitigungssteuerschnittstelle, DCI, zwischen dem Typ-C-Verbinder und einer Fehlerbeseitigungssteuerschnittstellen-,DCI-,Einheit im System unter Verwendung einer physikalischen, phy, Schnittstelle des Universellen Seriellen Busses, USB, wobei die phy-USB-Schnittstelle mindestens einen Sendeempfänger aufweist, und Lanes zwischen dem mindestens einen Sendeempfänger der phy-USB-Schnittstelle und dem Typ-C-Verbinder die DCI-Signale basierend auf der Konfigurationskanal-,CC-,Stifterkennung und -Ausrichtung empfangen oder senden,
wobei USB D+ und/oder USB D- Lanes des Typ-C-Verbinders zum Austauschen der DCI-Signalisierung verwendet werden, und die DCI-Signalisierung Grenzabtastungsseitenband-,BSSB-,Steuer- und - Datensignale umfasst.

9. Verfahren nach Anspruch 8, ferner umfassend ein Auswählen eines Sendeempfängers in der phy-USB-Schnittstelle zum Empfangen oder Senden von DCI-Signalen basierend auf der CC-Stiftausrichtung.

10. Verfahren nach Anspruch 8, ferner umfassend ein Erzeugen mindestens eines Signals, um eine Nicht-DCI-Komponente zu veranlassen, in einem Zustand reduzierten Leistungsverbrauchs zu bleiben, während DCI-Signalisierung zwischen dem Verbinder und einer DCI-Einheit ausgetauscht wird.

11. Maschinenlesbares Medium mit Anweisungen, die bei Ausführung durch eine Maschine die Maschine zum Durchführen eines Verfahrens nach einem der Ansprüche 8 bis 10 veranlassen.

## Revendications

1. Système comprenant :
une unité à interface de contrôle de débogage (DCI) ;
un connecteur de type C ;
une interface physique (phy) à bus série universel (USB) couplée au connecteur de type C, l'interface phy USB ayant au moins un émetteur-récepteur, des lignes entre l'au moins un émetteur-récepteur de l'interface phy USB et le connecteur de type C étant configurées pour recevoir ou émettre des signaux DCI sur la base d'une détection et d'une orientation des broches de canal de configuration (CC) ; et
une logique d'interface couplée à l'unité DCI et à l'interface phy USB pour échanger une signalisation d'interface de contrôle de débogage (DCI) entre le connecteur et l'unité DCI,
des lignes USB D+ et/ou USB D- du connecteur de type C étant utilisées pour échanger la signalisation DCI, et la signalisation DCI incluant des signaux de contrôle et de données de bandes latérales de test périphérique (BSSB).

2. Système selon la revendication 1, dans lequel l'unité DCI, le connecteur, l'interface phy USB et la logique d'interface font partie d'un châssis fermé.

3. Système selon la revendication 1, dans lequel l'interface phy USB comprend une paire d'émetteurs-récepteurs, un émetteur-récepteur de la paire d'émetteurs-récepteurs étant sélectionné pour recevoir ou émettre des signaux DCI sur la base de l'orientation des broches CC.

4. Système selon la revendication 1, dans lequel l'interface phy USB comprend une interface phy à bus série universel 2.0 (USB2).

5. Système selon la revendication 4, dans lequel l'interface phy USB2 comprend un pilote USB2 utilisé pour la signalisation de sortie de données DCI et des récepteurs USB2 pour les signaux de données et d'horloge de réception DCI.

6. Système selon la revendication 1, dans lequel la logique d'interface est fonctionnelle pour générer au moins un signal pour amener un composant non DCI à rester dans un état de consommation réduite d'énergie pendant que la signalisation DCI est échangée entre le connecteur et l'unité DCI.

7. Système selon la revendication 1, dans lequel la signalisation DCI doit se produire pendant un temps de démarrage à froid ou quand des dispositifs USB ne sont pas connectés à des ports ou sont dans l'état de suspension.

8. Procédé destiné à être utilisé dans un système ayant un châssis fermé et un connecteur de type C, le procédé comprenant les étapes consistant à :
détecter des broches de canal de configuration (CC) quand un câble est branché dans le connecteur de type C ;
détecter une orientation des broches CC en réponse à la détection du fait que les broches CC sont branchées dans le connecteur de type C ; et
échanger une signalisation d'interface de contrôle de débogage (DCI) entre le connecteur de type C et une unité à interface de contrôle de débogage (DCI) dans le système au moyen d'une interface physique (phy) à bus série universel (USB), l'interface phy USB ayant au moins un émetteur-récepteur, des lignes entre l'au moins un émetteur-récepteur de l'interface phy USB et le connecteur de type C recevant ou émettant la signalisation DCI sur la base de la détection et de l'orientation des broches CC,
des lignes USB D+ et/ou USB D- du connecteur de type C étant utilisées pour échanger la signalisation DCI, et la signalisation DCI incluant des signaux de contrôle et de données de bandes latérales de test périphérique (BSSB).

9. Procédé selon la revendication 8, comprenant en outre l'étape consistant à sélectionner un émetteur-récepteur dans l'interface phy USB pour recevoir ou émettre des signaux DCI sur la base de l'orientation des broches CC.

10. Procédé selon la revendication 8, comprenant en outre l'étape consistant à générer au moins un signal pour amener un composant non DCI à rester dans un état de consommation réduite d'énergie pendant que la signalisation DCI est échangée entre le connecteur et une unité DCI.

11. Support lisible par machine, ayant des instructions qui, lorsqu'elles sont exécutées par une machine, amènent la machine à réaliser un procédé selon l'une quelconque des revendications 8 à 10.
